# EUROPEAN PATENT APPLICATION

(11) **EP 1 312 655 A2**
(43) Date of publication of application: **21.05.2003**
(21) Application number: 02023804.4
(22) Date of filing: 23.10.2002
(51) Int. Cl.: C09D 127/12, B32B 5/26, C09D 5/02, E04B 1/06, B27N 7/00

(54) **Fluoropolymer coating compositions**

(30) Priority: 25.10.2001 US 352923 P
(71) Applicant: Armstrong World Industries, Inc., Lancaster Pennsylvania 17603 (US)
(72) Inventor: Belmares, Hector, Lancaster, Pennsylvania 17603 (US); Caldwell, Kenneth G., Mountville, Pennsylvania 17554 (US)
(74) Representative: Finck, Dieter, Dr.Ing.

(57) **Abstract**

Disclosed is both a method and apparatus related to coated panels. The panels are coated with an ultra thin coating of fluoropolymer. The coating imparts resistance to staining, washability, scrubbability, and soiling, as well as long durability. Furthermore, excellent adhesion is obtained with the ultra thin fluoropolymer when applied to panels.

## Description

### FIELD OF THE INVENTION

The present invention relates to coated panels and in particular to ultra thin fluoropolymer coated panels.

### BACKGROUND

Acoustical panels have varied uses, for example as ceiling panels, walls, panels, and covers. A long-withstanding problem with acoustical panels has been the reduced durability where the initial pristine acoustical panels gradually change color due to the absorption of soot and other air pollutants, lose light reflectivity, and the panels become soiled and need to be replaced.

The acoustical panels cannot easily be washed or scrubbed without damaging the front face paint, particularly in typical acoustical panels where weak and porous paints are applied to retain acoustical properties. For other acoustical panels, such as metal ceiling panels, the front face paint is compatible with oils, mineral or fatty oils, the latter present in the soot suspended in the air, particularly in airports and parking garages. Paint becomes permanently damaged when the oils in the soot dissolve or plasticize the paint, weakening the paint surface and allowing more soot to deposit thus avoiding the proper further cleaning of the damaged surface that becomes permanently stained and damaged with the deposition of soot. In addition, as mentioned above, a good segment of the commercial acoustical panels have porous paints, holes, and fissures that confer very high acoustic properties to the panel. For the large variety of acoustical panels, to confer long durability resistant to washing, scrubbing, staining, soiling, and rusting properties to the panels, fluoropolymer coatings are candidates. However, these coatings traditionally have presented many drawbacks. Ordinary thick fluoropolymer coatings would decrease the acoustical properties of the panel due to plugging of pores, holes, and fissures. Acoustical panels in general have a very limited low range of temperatures to be thermally treated because of thermal damage and discoloration of paints and panel components. Also, the surface treatment to improve durability must be long lasting, thus requiring satisfactory adhesion to panel surfaces. Fluoropolymers are characterized by having very low adhesion therefore needing primers or conversion coatings previous to the fluoropolymer coating. The applied fluoropolymer coating also requires good spreadability. Otherwise, when the panel is washed, scrubbed, or soiled, the bare spots will show dramatically. The problem is compounded by the highly variable paint composition of the acoustical panels and their different degree of smoothness.

Typically, coating materials of fluorine-containing polymers require high temperature baking to form the film. The field in which they are used is limited to substrates that can withstand those temperatures which excludes most acoustical panels. In addition, such fluoropolymers are often only available in a high-melting temperature powder form or dissolved in a highly air polluting solvent. In the powder form, they need to be applied electrostatically by powder coating techniques. In a solvent form, the solvent is evaporated to leave a dry film. Polytetrafluoroethylene (PTFE) has no crystalline melting point *per se,* and has a high sintering point, and consequently the sintering point is well above the temperature that most substrates can withstand, including a large segment of acoustical panels.

Typically, deposited films are relatively thick with low adhesion values and are not acoustically transparent. Such films are adhered by thermal-melt-bonding them to a substrate by means of an intermediary thermoplastic film. The fluoropolymer film is formed from PTFE dispersions and care needs to be exercised that the substrate is not melted or scorched during the thermal-melt-bonding process.

Another requirement for acoustical panels is good spreading of the fluoropolymer coating concomitant with long term compatibility on the substrate surface. Both concepts applied to polymer films are of great importance in many coating applications, particularly in the durable acoustical panel realm. A fluoropolymer coating can be spread but in most cases is not in thermodynamic equilibrium and therefore spontaneous dewetting occurs afterwards, especially by temperature variations. Dewetting is an undesirable phenomenon since it will expose the underlying substrate and cause surface roughness or defects that finally lead to deleteriousness of the film properties.

One of the problems associated with coalescing higher glass transition temperature (Tg) emulsions is the potential formation of microflocculation (Toronto Society for Coatings Technology, Journal of Coatings Technology (JCT), Vol. 73, No. 916, 2001). Microflocculation is best defined as the clumping together of polymer particles into a larger particle. If the microflocculation is extensive, the coating will appear to be full of grit or even worse, delaminates. Water emulsions of appropriate fluoropolymers are important to eliminate or greatly reduce the VOCs emitted by the common presentation of fluoropolymers as coating solutions in a solvent generally highly polluting. An alternative presentation of fluoropolymers is as powder coatings that coalesce at high temperatures. This process and these ordinary fluoropolymers give relatively thick coatings with poor adhesion unless primers or conversion layers are first placed on the substrate before applying the fluoropolymer coating.

### SUMMARY

The present invention includes a panel coated with an ultra thin coating of a fluoropolymer. The panel is typically an acoustical panel and the fluoropolymer may be applied as a water emulsion. The coating is applied having a thickness of between about 0.01 to about 50 microns. The applied coating imparts durability and stain resistance to the panel.

Furthermore, a method of applying a fluoropolymer coating to a panel is included. The method includes applying the fluoropolymer to a panel to have a thickness between about 0.01 to about 50 microns. The fluoropolymer comprises about 0.001 to about 5.0 grams per square foot of panel. The coating also imparts a surface tension of between about 10 to about 40 dynes/cm.

Additionally, the fluoropolymer coating coalesces at temperatures between about 1°C to about 200°C. The fluoropolymer may be applied to either a painted or treated surface or an untreated surface. The fluoropolymer coating is also substantially acoustically transparent whereby sound may pass through the coating.

### DETAILED DESCRIPTION

The panels are coated with an ultra thin coating of fluoropolymers. The term fluoropolymer includes large, medium and low molecular weight, linear or crosslinked chains of polymeric units that contain fluorine atoms attached covalently to the polymer chain or at the backbone polymer chain. The fluoropolymers include pendant groups attached to the polymer chain, or further attached monomeric or polymeric groups after the main polymer chain has been formed. The low molecular weight fluoropolymer chains include fluoro-oligomers and fluoro-telomers. The fluoropolymers can be further mixed or reacted with appropriate monomeric or polymeric compounds to bring or enhance a given desirable property of the ultra thin coatings, or further compounded with additives, pigments, and fillers. The coating can provide improved staining, washability, scrubability, and soiling resistance.

The ultra thin coating is applied to a panel and may be applied to an acoustical panel. The ultra thin coating may cover the acoustical panel surface in a uniform way, reproducing the surface very closely and not occluding pores or punched holes of the panel surface when the latter are present. The ultra thin coatings are nearly invisible, uniform, and of high adherence to the substrate surface. They will not show visible streaks and other typical undesirable defects, producing a substrate surface that resembles closely the untreated substrate surface. These characteristics are very important for acoustical panels where acoustical properties, appearance, and durability in general are desired. Coating thickness typically depends on the requirements of the application and can be, for example, from about 0.01 to about 50 microns, from about 0.5 to about 30 microns, and from about 0.8 to about 10 microns.

Due to the relatively low temperature coalescence of the ultra thin fluoropolymer coatings, heat-sensitive acoustical panels are not damaged by the relatively low temperature thermal post-treatment after application of the fluoropolymer coating. Once applied to the surface, the coating is permitted to dry and/or cure. This can be done at ambient temperature, or may be heated in a convection oven or a forced-air draft oven to assist in shortening the drying and/or curing process. The range of temperatures is from ambient temperature to about 300°C in one embodiment, from about 50°C to about 190°C in a second embodiment and from about 60°C to about 150°C in a third embodiment. For some acoustical panels such as, but not limited to, metal ceiling panels, temperature range is wider and the upper limit can be about 50°C higher in each case.

The fluoropolymers may be emulsified in water. In addition, the ultra thin fluoropolymer coatings do not come off or bead up when heat is applied to the surface. Adhesion is obtained with the ultra thin fluoropolymer when applied directly upon the varied types of face paints used for acoustical panels. This may be accomplished without any previous expensive surface pretreatment of the substrate such as corona discharge, UV or electron beam irradiation, chemical etching, or surface roughening by mechanical means and without the use of primers or conversion coatings previous to the application of the fluoropolymer coating.

Low temperature coalescence for the fluoropolymer coating provides a smooth coalesced film. The terms "film" and "coating" may be interchanged as to meaning when referring to the applied coating composition to the panel. The fluoropolymer is an appropriate polymer obtained as emulsion in water. Water emulsions of appropriate fluoropolymers may eliminate or greatly reduce the VOCs emitted by the common presentation of fluoropolymers as coating solutions in a solvent generally highly polluting. Ranges for coalescing temperatures for water emulsions of the fluoropolymer are from about 1°C to about 200°C, from about 10°C to about 100°C and from about 20°C to about 70°C.

A variety of acoustical panels based on glass fiber, mineral fiber, gypsum, vinyl-coated-gypsum or metal may be face-coated, back and/or side coated with ultra thin, adhesive, low-temperature coalescing fluoropolymer coatings. The acoustical panel surface to be coated can be a painted or unpainted surface; chemically and/or radiation pretreated or untreated surface; hole-punched, porous or smooth in texture; hydrophilic or hydrophobic in nature; and combinations thereof. The acoustical panel substrate paint, where the fluoropolymer ultra thin coating is to be applied, can be a previously dried paint or a paint that has not been previously dried. The latter case saves energy expenditure because the paint and the applied fluoropolymer coating can be simultaneously dried in one step. Particularly for porous and hole-punched surfaces, the actual surface area of the fluoropolymer coating, e.g., the area of the fluoropolymer coating in contact with staining agents, may be larger than the geographic surface area because of the three-dimensional nature of the panel surface.

In another embodiment, the fluoropolymer coating composition is sufficiently fluid by, for example, including a solvent or dispersant, but not limited to water, to be coated onto a surface by dipping, spraying, roller-coating, paint brush coating, curtain coating, or any other coating process. When dried and/or cured on the surface of an acoustical panel, the fluoropolymer coating composition typically forms a coating that imparts to the panel, one, and more, of the following properties: resistance to staining, washability, scrubability, soiling, and long durability.

In an additional embodiment, due to the excellent adhesion, a very good fluoropolymer coating spreading is obtained without the use of harmful solvents ordinarily used to apply fluoropolymer coatings to surfaces. In addition, the said ultra thin fluoropolymer coatings do not come off or bead up when temperature is applied to the surface. By these means, highly durable acoustical panels are obtained.

In another embodiment, the fluoropolymer-coated acoustical panels surface have a significantly lower surface tension than the untreated panels. At very low surface tensions, the adhesion to the panel surface decreases due to incompatibility and at very high surface tensions the hydrophobic property of the fluoropolymer coating decreases and with it the resistance to staining, washability, scrubability, and soiling. In general, the surface tension of the fluoropolymer-coated surface must be less than the untreated surface to bring desired improvement of said properties. The range of surface tension for fluoropolymer-coated surfaces is from about 10 to about 40 dynes/cm with the range from about 15 to about 35 dynes/cm and the range from about 20 to about 30 dynes/cm.

### Acoustical panels

Acoustical panels may comprise a large variety of materials with varied applications. Materials which may be used include glass fiber, mineral fiber, gypsum, vinyl-coated-gypsum, mixtures thereof, metal, ceramic materials, wood, plastic, and the like. Within these compositions other components can be typically added if so desired, such as fillers, dispersing compounds, flocculants, pigments, binders, and many other materials organic and inorganic to introduce specific properties to the acoustical panel. Typical applications for the acoustical panels include ceiling panels, support grids for ceiling panels, walls, partition boards, and panels. Paints for acoustical panels can have varied compositions to impart the specific properties desired for the panel. The paints may impart specific properties to the surface of the panel such as porosity, smoothness, a rough and irregular surface. The panel may be punched with holes, fissures and other patterns to modify and improve its acoustical properties. The fluoropolymer coating applied does not significantly decrease the untreated panel acoustical properties by plugging the pores, fissures and holes of the panel.

### Fluoropolymer Coatings

Suitable fluoropolymer compounds include, for example, amorphous perfluoropolymers, fluorinated acrylates, polyvinylfluoride (PVF), polyvinylidene fluoride (PVDF), fluorinated polyurethanes, fluorinated thermoplastic elastomers, copolymers of chlorotrifluoroethylene and vinyl ether, perfluorinated ionomers and modified PTFE.

Examples of suitable fluoropolymer compounds include, but are not limited to, the series of acrylic modified polyvinilydene diflouride (polyvinylidene fluoride) available from Atofina Chemicals, King of Prussia, PA, USA. These compositions are presented as water emulsions or suspensions at typically 48 to 50 percent solids, and can be obtained as pigmented or unpigmented compositions. Among these compositions, but not limited to, are Kynar RC-10,147; Kynar RC-10,148; Kynar RC-10,141; and Kynar RC-10,139. These fluoropolymer compositions may be micro-molecular scale blendings of acrylics as described in R. A. Iezzi, et.al., Progress in Organic Coatings, vol. 40, pp. 55-60, 2000.

Further suitable fluoropolymer compounds include Foraperle® available from Atofina Chemicals, King of Prussia, PA, USA. These are acrylic fluorinated polymers and copolymer solutions in solvents or water emulsions. Among the solvents are, but not limited to butyl acetate, isopropyl acetate, water/methoxypropanol, water/N-methylpyrrolidone, water/isopropanol, water/propyleneglycol, and white spirit. Some of the trade names are Foraperle B208, 225, 226, 244, 303D, 305D, 321, 330, 333, 390, 501, 503, 530, and 2500.

A further example of suitable fluoropolymer compounds include, but are not limited to, fluoropolymer aqueous dispersions, room-temperature coalescable, described in US Patent 5,880,204, and fluoropolymer compositions as described in U.S. Patents Nos. 5,854,364; 5,798,415; 4,946,889; and 5,034,460.

More than one fluoropolymer compound can be used in any coating composition. The use of mixtures of more than one fluoropolymer compound may change a given property or set of properties of the coating. For example, properties such as adhesion, surface tension, water resistance, washability, scrubability, refractive index, organic molecules transport and sorption properties can be modified using different fluoropolymer compounds, or mixtures of fluoropolymer compounds.

The fluoropolymer compound, or compounds, may be in a water emulsion form to reduce volatile organic compounds (VOCs) during film formation and to avoid the damage of solvent-soluble or solvent-compatible components that may be present on the acoustical panel surface.

The amount of fluoropolymer composition on dry basis can range from about 0.001 to about 5.0 g. per square foot of substrate geographical surface. At high rates of application, the fluoropolymer will show to the unaided eye visible surface defects such as streaking, uneven surface, and will be visibly damaged by scratching, washing or scrubbing the surface. The rate of fluoropolymer composition application on dry basis is about 0.05 to about 3.0 g. per square foot and on dry basis from about 0.08 to about 1.0 g. per square foot of substrate geographical surface.

### Surface-Active Agents

Wetting of surfaces, particularly by water emulsions of fluoropolymer compositions, may further enhance the spreadability and adhesion of the fluoropolymer compositions on the acoustical acoustical panels. Good water wetting of the surface consequently brings a good distribution of fluoropolymer microparticles. Also, the surface-active agent favors the dispersion and stability of the emulsified particles, particularly when the emulsions are diluted to proper solids concentration of fluoropolymer. Good wetting of other additives such as pigments is also favored by the addition of the surface-active agent. Surface-active agents include Zonyl fluorosurfactants (E.I. DuPont Specialty Chemicals, Wilmington, Delaware, USA), Zonyl FSN and Zonyl FS-300, which are both non-ionic. These fluorosurfactants are a block polymer of a fluorinated moiety attached to a polyethylene glycol moiety and are sold as 40% solids in a solvent. The range of incorporation in the composition is from about 0.001 to about 3%, from about 0.01 to about 0.8% and from about 0.05 to about 0.15% solids by weight of dry fluoropolymer coating. The final dispersion can be shaken or stirred before use.

### Further Additives

Additional compatible polymers, light-scattering pigments, particulate fillers such as colloidal and particulate xerogels (such as silica, alumina-coated silica, and zirconia), solvents, viscosity affecting agents, stabilizers, and pH-controlling buffers can be added to the composition to enhance performance or processing. The particulate fillers, when present, are in the range of about 0.1 to about 70%, by weight, about 2 to about 40%, about 4 to about 20% of the composition in the absence of solvent or water. If too much particulate filler is used, the coating tends to lose adhesive and hydrophobic properties.

### Coating Process And Methods

The fluoropolymer compositions of this invention can be applied to a surface of acoustical panels by known methods such as, for example, spraying, dip-coating, spin-coating, brush painting, roll coating, knife coating, and curtain coating. The composition can be applied to a large variety of acoustical panel surfaces. After drying and/or thermally curing the fluoropolymer coating, the composition typically forms an adherent and abrasion resistant coating that can be scrubbed or washed with wet cloth or wet paper.

One way to control coating thickness is by altering the percent solids (by weight) of the fluoropolymer dispersion that contains all the additives and surface-active agents. The percent solids can be from about 0.01 to about 80%, from about 1 to about 20% wt.%, and from about 1.5 to about 10% of the dispersion. Another way to control coating thickness is by altering the amount of dispersion or solution of fluoropolymer placed on the substrate surface.

The suspending liquid is water, however other known solvents may be used in combination with water, alone or in mixtures.

Once applied to the surface, the coating is permitted to dry and/or cure. This can be done at ambient temperature, or may be heated in a convection oven or in a forced-air draft oven to assist or shorten the drying and/or curing process. The range of temperatures is from ambient temperature to about 300°C, from about 50°C to about 190°C and from about 60°C to about 150°C, and is limited by the temperature that the acoustical panel can take without being damaged. For some acoustical panels such as, but not limited to, metal ceiling panels temperature range is wider and the upper limit can be about 50°C higher in each case.

At ambient temperature, the drying time is 2 to 6-hr. At 150°C, the time is 1 minute in a forced-air draft oven. Optionally, an infrared oven, a heating gun, a microwave oven, an infrared laser, or other sources of thermal energy can also be used as the source of heat for coating drying and/or curing.

Alternatively, the fluoropolymer compositions, particularly the water emulsions, can be applied directly upon the substrate paint that has not been dried or subjected to a thermal treatment. Then the paint and the fluoropolymer coating are cured and/or dried together in one step together, thus saving costs of thermal energy and making the coating process simpler.

### Applications

Acoustical panels comprise, without limiting the invention, ceiling panels, support grids for ceiling panels, walls, partition boards, panels, and the like. Acoustical panel paints can have varied compositions to impart the specific properties desired for the panel. As an illustration but by no means limiting, the paints can impart specific properties to the surface of the panel such as porosity, smoothness, a rough and irregular surface, or the paint can be afterwards punched with holes, fissures and other patterns to modify its acoustical properties. The fluoropolymer coating applied must have good adherence to the high variety of compositions and morphologies that characterize acoustical panel paints.

### EXAMPLES

### Testing Procedures

Certain properties of the ultra thin fluoropolymer coating compositions discussed above, and in the following examples, were determined using the following procedures.

### Washability

The test is carried out to measure the resistance of the acoustical panel coating such as paint to hand washing by a consumer. It follows test reference MEP 138 R.1 with Federal Standard 141A, Method 6141.

Acoustical panels of dimensions 6-7/8-inch by 17-7/8-inch are tested in a Gardner Straight Line Washability Machine (Pacific Gardner Corporation). A sponge is drawn over the board that is kept wet with a 0.5% solution of Ivory Flakes. The number of oscillations (cycles) is recorded at the first indication of coating failure. The test is continued until 150 cycles are completed or longer if specified by originator of the test.
One determination is run. Number of cycles to initial breakthrough total number of cycles. Specimen is rated as follows:

| | | |
|---|---|---|
| No breaks | = 0% | = A |
| Slight | = 0-10% | = B |
| Moderate | = 10-25% | = C |
| Extensive | = 25-50% | = D |
| Very Extensive | = 50-100% | = E |

### Scrubbability

The test is carried out to measure the resistance of the acoustical ceiling panel coating such as paint to hand washing by a consumer.

Acoustical panels of dimensions 6-7/8-inch by 17-7/8-inch are tested in accordance with test ASTM D2486. Federal Standard 141A, Method 6142, MEP 138 R.1.

The test comprises a hard bristle brush to scrub the board and a 0.5% solution of Ivory Flakes is used to keep the board wet during the test. The number of cycles at the first sign of breakthrough is recorded. The test is continued until 150 cycles or as specified by the originator of the test. One determination is run.

Specimen is rated identically as for the washability test described above.

### Soiling Test

This test procedure is used to examine relative amounts of soiling deposited or embedded on the exposed surface of panels by airborne particulate matter entrained in the air stream of a recessed simulated air diffuser. Soiling composition was obtained from Certified Testing Laboratories, Inc., Dalton, GA under the name Sanders and Lambert "standard dirt" and comprises (by weight) peat moss (35%), Portland cement (15%), Iceberg clay (15%), Sno-brite clay (15%), sodium chloride (5%), gelatin (3.60%), carbon black (1.50%), red iron oxide (0.25%), stearic acid (2.20%), oleic acid (2.20%), palm oil (3.80%), lanolin (1.40%). The simulated air diffuser has a venturi air diffuser set at an air flow of 430 fpm (4.8 miles/hr) with the Schutte and Koerting Co. rotameter adjusted so the widest part of the float is at 525 mm (11.7 scfm). The amount of "standard dirt" added is a level teaspoon of dirt every 7.5 min. for one hour. After one hour, the main air supply was turned off and the test specimen was removed from the chamber and inspected visually before and after wiping it with a wet cloth or paper towel.

One specimen is tested with dimensions 22.5 by 22.5-inch minimum and 24 by 24-inch maximum.

Test specimen for each one of the staining materials is rated as follows:

| | |
|---|---|
| No stain | = 5 |
| Slight stain | = 4 |
| Moderate stain | = 3 |
| Extensive stain | = 2 |
| Very Extensive stain | = 1 |
| Disastrous stain | = 0 |

### Staining Test

Four highly staining materials often causing strong staining in acoustical panels are prepared and tested individually. Grape juice (Welch brand), mustard (French's brand), coffee (recently brewed) were diluted with four parts of water by weight. Fine carbon black suspension in water was prepared at 10% solids by weight. For the testing, four drops of each of the staining materials are placed in a corresponding spot on the surface of the acoustical panel, dried overnight at room temperature, and then rinsed with water and wiped.

Test specimen for each one of the staining materials is rated as follows:

| | |
|---|---|
| No stain | = 5 |
| Slight stain | = 4 |
| Moderate stain | = 3 |
| Extensive stain | = 2 |
| Very Extensive stain = | 1 |
| Disastrous stain | = 0 |

### Adhesion

"Adherence" to a surface means the ability to be retained on the surface. Scrubbability, washability, stain, and soiling tests are an indirect determination of the adherence, dewetting, and uniformity of fluoropolymer coating spreading. Standard tests, such as the "tape test", that involves a cellophane adhesive tape were not carried out due to the extremely non-sticking properties of the fluoropolymer ultrathin coating, particularly after curing, and the very small thickness of said fluoropolymer coating.

### Surface Tension

Standard contact angle measurements were made by measuring the contact angle of a small drop of water resting at equilibrium at room temperature on the panel surface.

### EXAMPLE 1

An amount of 208.3g of water-borne, AMF coating fluoropolymer emulsion Kynar RC-10,147 (Atofina Chemicals, King of Prussia, PA, USA) 48% solids was diluted with 1791.7g of deionized water, under stirring to obtain a 5% solids emulsion. Brookfield viscosity at 10 rpm was 3.5 cps. Then a fine fissured Minaboard acoustical panel (Armstrong World Industries, Lancaster PA, USA) was sprayed with the fluoropolymer water emulsion at a rate of 5.0g of water emulsion (5% solids) per square foot of geographical board surface. The fine fissured Minaboard acoustical panel has punched holes and fine fissures to increase the acoustic properties of the panel. The board was dried and cured in a convection oven at 310F (154C) for 10 min. The panel properties for the fluoropolymer -coated panel and a comparison of results with an untreated control are shown in Table 1. The substrate paint composition of fine fissured Minaboard panels is above the CPVC (critical pigment volume concentration) and therefore the paint is purposely porous to obtain high acoustic properties.

**TABLE 1.**

| Comparison of fluoropolymer ultrathin coating applied on fine fissure Minaboard acoustical panel vs. an untreated control. Substrate paint is above the CPVC value and therefore the paint is very porous to obtain high acoustic properties. | | |
|---|---|---|
| Treated With Fluoropolymer Overcoat | | Untreated Control |
| Scrubbability cycles | A, at 100 cycles, B at 150 cycles | E (total failure) at 10 |
| | | |
| Washability cycles | A, at 150 cycles | E (total failure) at 18 |
| | | |
| Soiling test | 5 | 3-4 |

| Stain Resistance to: | | |
|---|---|---|
| | | |
| Mustard | 4 | 3 |
| Grape juice | 2 | 0 |
| Coffee | 2 | 1 |
| Carbon black | 3 | 2 |
| | | |
| Surface Tension | 22-29 | 34 |

Table 1 shows the unexpected and high superiority of the fluoropolymer ultrathin- coated fine-fissured Minaboard panel when compared with the untreated control in key properties such as scrubbability, washability, soiling and antistaining resistance. Incidentally the fine fissures of the Minaboard panel combined with a porous paint confer higher acoustic performance to the panel; however, they are fissures and pores that increase the surface area of fluoropolymer application compared with the geographical surface area.

Color parameters L*, a*, b* were unchanged for the fluoropolymer treated fissured Minaboard compared with the untreated control. Also unchanged was the acoustic parameter NRC. This parameter measures the ability of the board to quench sounds in a room. Also unchanged were the flame spread rating (30/30), the accelerated heat aging and QUV accelerated weathering. All this shows that the fluoropolymer treated panel compared with the untreated panel are indistinguishable regarding key properties such as color parameters, acoustic parameter, and flame rating. In addition, the acoustic data shows that the fissures and pores needed for high acoustic properties are left unplugged after the application of the ultrathin fluoropolymer coating.

Five grams of 5% fluoropolymer. emulsion contains 0.25g of fluoropolymer solids spread on one geographic square foot of panel. After drying and curing the fluoropolymer coating, the approximate thickness of the applied coating is about 2 microns (0.04 mils)

### EXAMPLE 2

The same as Example I except that the fluoropolymer emulsion was placed on recently painted fine fissure Minaboard acoustical panel. The paint applied to the panel surface was fresh and recent and it was not subjected to any thermal process. The results were statistically indistinguishable from the results given in Example 1, including color parameters, acoustic properties, and flame rating spread. This shows that the fluoropolymer ultrathin coating can be applied to fresh not dried paint without impairing the unexpected excellent properties acquired and described in Example 1. This lowers production costs due to simplification of the process and the use of less thermal energy by drying the panel in one step instead of two steps.

### EXAMPLE 3

An amount of 500g of a 20% solids fluoropolymer emulsion Foraperle 503 (Atofina Chemicals, King of Prussia, PA, USA) was diluted with 1495g of deionized water under constant stirring and then 5.0g of a 40% water solution of Zonyl FS-300 were added under constant stirring. The total solids content of the formulation was 5%. Brookfield viscosity at 10 rpm was 4 cps. Then a plain Minaboard acoustical panel (Armstrong World Industries, Lancaster PA, USA) without fissures or punched holes was sprayed with the fluoropolymer water emulsion at a rate of 8.0g of water emulsion (5% solids) per square foot of geographical board surface. The board was dried and cured in a convection oven at 310F (154C) for 10 min. The panel properties for the fluoropolymer coated panel and a comparison of results with an untreated control using the same substrate paint and with a commercial USG (United States Gypsum Corporation) product named vinyl gypsum. The latter comprises a gypsum board covered on the front face with a polyvinylchloride film several mils in thickness. Results of this test are shown in Table 2. The substrate paint composition of the plain Minaboard acoustical panel was below the CPVC (critical pigment volume concentration) and therefore the paint is purposely less porous than the substrate paint of Example 1.

Table 2 shows the unexpected and high superiority of the fluoropolymer ultrathin- coated plain Minaboard acoustical panel when compared with the untreated Minaboard control in key properties such as scrubbability, washability, soiling and antistaining resistance. Also, a new comparison was added for the soiling test, soiling values after the test without wiping and soiling values after wiping. The fluoropolymer ultrathin coating shows great repellency towards soot and is superior to the vinyl-covered gypsum panel. Tests for scrubbability were stopped at 20,000 cycles with no damage to the surface. Washability test was not run because the scrubbability test is more severe and the test is much time consuming at 20,000 cycles. In flame spreading rating, plain Minaboard coated with fluoropolymer ultrathin coating was superior to vinyl gypsum.

Eight grams of 5% fluoropolymer emulsion contains 0.40g of fluoropolymer solids spread on one geographic square foot of panel. After drying and curing the fluoropolymer coating, the approximate thickness of the applied coating is about 3.2 microns (0.06 mils)

**Table 2.**

| Comparison of fluoropolymer ultrathin coating applied on plain Minaboard acoustical panel vs. an untreated control and vs. USG vinyl-covered gypsum acoustical panel. Substrate paint for the plain Minaboard is below the CPVC value and therefore the paint is less porous than the paint of Example 1. | | | |
|---|---|---|---|
| Treated With Fluoropolymer Overcoat | | Untreated Control | Vinyl Gypsum |
| Scrubbability cycles | A, at 20,000 cycles | E (total failure) at 8 cycles | A, at 20,000 |
| | | | |
| Soiling test Before wiping | 4 | 2 | 2 |
| After wiping | 5 | 3-4 | 5 |
| | | | |

| Stain Resistance to: | | | |
|---|---|---|---|
| | | | |
| Mustard | 5 | 4 | 5 |
| Grape juice | 5 | 1 | 5 |
| Coffee | 5 | 1 | 5 |
| Carbon black | 5 | 2 | 4 |
| | | | |
| Flame Spreading Test, 30/30 | 21.7 | Not Det. | 24 |
| | | | |
| Taber Abrasion Test Weight loss | 0.0154g | Not Det. | 0.0142 |
| Breakthrough | No | Not Det. | No |

### EXAMPLE 4

Same as Example 3 except that the same proportional amount of Foraperle 503 fluoropolymer emulsion at 5% solids without Zonyl FS-300 was now added directly to the water suspension comprising the paint composition of Example 3. The Foraperle/ paint composition was sprayed to the plain Minaboard acoustic ceiling tile (Armstrong World Industries, Lancaster PA, USA) at the same paint rate per sq.ft as for Example 3. The board was dried and cured in a convection oven at 310F (154C) for 10 min.

**Table 3.**

| Fluoropolymer added directly to the paint water suspension before spraying it over the board. Comparison with a board painted without the fluoropolymer addition. | | |
|---|---|---|
| Stain resistance to: | Untreated control | Paint with added fluoropolymer |
| Coffee | 1 | 5 |
| Tea | 1 | 5 |
| Coke | 3 | 5 |
| Diluted grape juice | 0 | 3 |
| Carbon black dispersion | 0 | 3 |

The improvement in stain resistance for the paint with added fluoropolymer before spraying is large. This is due to the highly hydrophobic fluoropolymer migrating to the surface of the paint during and before the drying step thus forming an ultrathin fluoropolymer coating on the paint surface after drying.

### EXAMPLE 5

Same as Example 3 but instead of plain Minaboard acoustical panel, Fireguard acoustical panel (Armstrong World Industries, Lancaster, PA, USA) was used. Fireguard is a trade name for an acoustical panel time fire rated. The comparison results for fluoropolymer ultrathin-coated panel, untreated panel and commercial USG vinyl-covered gypsum acoustical panel are shown in Table 4.

**Table 4.**

| Comparison of fluoropolymer ultrathin coating applied on Fireguard acoustical panel vs. an untreated control and vs. USG vinyl-covered gypsum acoustical panel. Substrate paint for the Fireguard panel is below the CPVC value and therefore the paint is less porous than the paint of Example 1. | | | |
|---|---|---|---|
| Treated With Fluoropolymer Overcoat | | Untreated Control | Vinyl Gypsum |
| Scrubbability cycles | A, at 20,000 cycles | E (total failure) at 8 cycles | A, at 20,000 |
| Soiling test | | | |
| Before wiping | 4 | 2 | 2 |
| After wiping | 5 | 3-4 | 5 |
| | | | |

| Stain Resistance to: | | | |
|---|---|---|---|
| | | | |
| Mustard | 5 | 4 | 5 |
| Grape juice | 4 | 1 | 5 |
| Coffee | 5 | 1 | 5 |
| Carbon black | 5 | 2 | 4 |
| | | | |
| Flame Spreading Test, 30/30 | 16.3 | Not Det. | 24 |
| | | | |
| Taber Abrasion Test Weight loss | 0.0106g | Not Det. | 0.0142 |
| Breakthrough | No | Not Det. | No |

### EXAMPLE 6

An amount of 500g of a 20% solids fluoropolymer emulsion Foraperle 503 (Atofina Chemicals, King of Prussia, PA, USA) was diluted with 1495g of deionized water under constant stirring and then 5.0g of a 40% water solution of Zonyl FS-300 were added under constant stirring. The total solids content of the formulation was 5%. Brookfield viscosity at 10 rpm was 4 cps. Then a metal-vector acoustical panel (Armstrong World Industries, Lancaster PA, USA) was sprayed with the fluoropolymer water emulsion at a rate of 2.0g of water emulsion (5% solids) per square foot of geographical board surface. The board was dried and cured in a convection oven at 310F (154C) for 10 min. The panel properties for the fluoropolymer -coated panel and a comparison of results with an untreated control using the same substrate paint are given in Table 5. The substrate paint for the metal acoustical panel is a powder coating proprietary formulation.

From the results shown in Table 5, the paint of the untreated control is damaged permanently by the oils contained in the soiling soot. After fluoropolymer ultrathin coating, the surface is impervious to the soot.

After drying and curing the fluoropolymer coating, the approximate thickness of the applied coating is about 0.8 microns (0.015 mils).

**Table 5.**

| Comparison of fluoropolymer ultrathin coating applied on a metal-vector acoustical panel vs. an untreated control. | | |
|---|---|---|
| Treated With Fluoropolymer Overcoat | | Untreated Control |
| Soiling test Before wiping | 2 | 1 |
| After wiping | 5 | 3 |
| | | |

| Stain Resistance to: | | |
|---|---|---|
| | | |
| Mustard | 5 | 5 |
| Grape juice | 5 | 5 |
| Coffee | 5 | 5 |
| Carbon black | 5 | 3 |

### EXAMPLE 7

Same as Example 6, except that the rate of application of the 5% solids fluoropolymer emulsion is 8.0g instead of 2.0g per square foot of geographical metal-vector acoustical panel.

The results were identical to the results shown in Table 5. This suggests that once the fluoropolymer spreads and wets well the surface, any additional amount on top of this interface layer does not improve the performance of the ultrathin layer. Consequently thick layers are not required for good performance. Additionally, even at the rate of application given in this Example 7, the relatively smooth surface of the metal panel starts showing visual defects of streaking, not severe but noticeable.

## Claims

1. A coated panel comprising:
a panel;
a coating applied to the panel having a thickness of between about 0.01 to about 50 microns and the coating comprising a fluoropolymer having a coalescence at temperatures, between about 1°C to about 200° C.

2. The coated panel of claim 1, wherein the coating comprises from about 0.001 to about 5 grams per square foot of the panel.

3. The coated panel of claim 1, wherein the coating imparts a surface tension of between about 10 to about 40 dynes/cm.

4. The coated panel of claim 3, wherein the coating imparts a surface tension of between about 15 to about 35 dynes/cm.

5. The coated panel of claim 4, wherein the coating imparts a surface tension of between about 20 to about 30 dynes/cm.

6. The coated panel of claim 1, wherein the fluoropolymer includes fruoro-oligomers and fluoro-telomers.

7. The coated panel of claim 1, wherein the fluoropolymer is selected from the group consisting of amorphous perfluoropolymers, fluorinated acrylates, polyvinylfluoride (PVF), polyvinylidene fluoride (PVDF), fluorinated polyurethanes, fluorinated thermoplastic elastomers, copolymers of chlorotrifluoroethylene and vinyl ether, perfluorinated ionomers, modified PTFE and combinations thereof.

8. The coated panel of claim 1, wherein the fluoropolymer comprises an acrylic modified polyvinyldyene fluoride.

9. The coated panel of claim 1, wherein the coating has a thickness of between about 0.5 to about 30 microns.

10. The coated panel of claim 9, wherein the coating has a thickness of between about 0.8 to about 10 microns.

11. The coated panel of claim 1, wherein the fluoropolymer having a coalescence of temperature between about 10° C to about 100° C.

12. The coated panel of claim 11, wherein the fluoropolymer having a coalescence of temperature between about 20° C to about 70° C.

13. The coated panel of claim 1, wherein the fluoropolymer is emulsified in water.

14. The coated panel of claim 1, wherein the panel is an acoustical panel.

15. The coated panel of claim 1, wherein the coating is substantially acoustically transparent.

16. A method for producing a coated panel comprising:
providing a panel;
applying to the panel a coating composition comprising a fluoropolymer having a coalescence at temperatures between about 1 °C to about 200° C and a thickness of between about 0.01 to about 50 microns.

17. The method of claim 16, wherein the coating is cured onto the panel.

18. The method of claim 17, wherein the coating is cured onto the panel at a temperature range of from about ambient temperature to about 300° C.

19. The method of claim 18, wherein the coating is cured onto the panel at a temperature range of from about 50 ° C to about 200° C.

20. The method of claim 16, wherein the coating is applied to the panel by dipping, spraying, roller-coating, brushing or a combination thereof.

21. The method of claim 16, wherein the coating composition is applied from about 0.001 to about 5 grams per square foot of the panel.

22. The method of claim 1, wherein the coating imparts a surface tension of between about 10 to about 40 dynes/cm.

23. The method of claim 22, wherein the applied coating composition imparts a surface tension of between about 15 to about 35 dynes/cm.

24. The method of claim 23, wherein the applied coating composition imparts a surface tension of between about 20 to about 30 dynes/cm.

25. The method of claim 16, wherein the fluoropolymer includes fruoro-oligomers and fluoro-telomers.

26. The method of claim 16, wherein the fluoropolymer is selected from the group consisting of amorphous perfluoropolymers, fluorinated acrylates, polyvinylfluoride (PVF), polyvinylidene fluoride (PVDF), fluorinated polyurethanes, fluorinated thermoplastic elastomers, copolymers of chlorotrifluoroethylene and vinyl ether, perfluorinated ionomers, modified PTFE and combinations thereof.

27. The panel of claim 1, wherein the fluoropolymer comprises an acrylic modified polyvinyldyene fluoride.

28. The method of claim 1, wherein the applied coating composition has a thickness of between about 0.5 to about 30 microns.

29. The method of claim 28, wherein the applied coating composition has a thickness of between about 0.8 to about 10 microns.

30. The method of claim 16, wherein the fluoropolymer having a coalescence of temperature between about 10° C to about 100° C.

31. The method of claim 30, wherein the fluoropolymer having a coalescence of temperature between about 20° C to about 70° C.

32. The method of claim 16, wherein the fluoropolymer is emulsified in water.
